# EUROPEAN PATENT SPECIFICATION

(11) **EP 1 024 067 B1**
(45) Date of publication and mention of the grant of the patent: **15.05.2002**
(21) Application number: 99830652.6
(22) Date of filing: 15.10.1999
(51) Int. Cl.: B60S 1/38, B60S 1/32

(54) **A windscreen wiper device for vehicles**
Scheibenwischervorrichtung für Kraftfahrzeuge
Dispositif d'essuie-glace pour véhicules

(30) Priority: 29.01.1999 IT TO006399
(43) Date of publication of application: 02.08.2000
(73) Proprietor: Federal-Mogul Ignition Srl, 20122 Milano (IT)
(72) Inventor: Gilli, Marco, 10040 Druento, Torino (IT)
(74) Representative: Marchitelli, Mauro

(56) References cited:
- DE-A- 3 744 237
- DE-A- 19 731 683
- US-A- 5 729 861
- US-A- 5 842 251

## Description

The present invention relates to a windscreen wiper device for vehicles, comprising a windscreen wiper blade articulated at the end of an arm, according to the characteristics of the preamble of independent claim 1.

The present invention is specifically directed to a windscreen wiper device wherein the arm has two straight sections offset from each other, a first of which is aligned to the blade and a second of which is spaced apart from the blade in a direction orthogonal to the general plane of the blade and comprising a retaining element for reducing the transversal vibrations of the blade, having an attachment portion for the connection to said second section of the arm, and an engagement portion of the blade which projects in a cantilever fashion from said attachment portion.

DE-A-3744237 discloses a wiper for motor vehicles, according to the preamble of claim 1 in which between a wiper-arm portion, which runs laterally next to the wiper blade, and the wiper blade there is provided an additional guide for the wiper blade at a distance from the coupling point between the wiper arm and wiper blade. Solutions similar to the one shown in DE-A-3744237 are shown by US-A-5842251 and DE-A-19731683 which disclose a windscreen wiper with a wiper arm and a wiper blade wherein the wiper blade is laterally guided by means of a device fixed to the wiper arm and having a guiding part for the wiper blade.

The object of the present invention is to provide a simple retainer element specifically designed for wiper blades having an integrated spoiler.

Characteristics and advantages of the present invention will become clear in the course of the detailed description which follows, given purely by way of non-limiting example, with reference to the attached drawings, in which:
- figure 1 is a schematic view of a vehicle having a windscreen wiper device according to the present invention,
- figure 2 is a partial perspective view of a windscreen wiper device according to the invention,
- figure 3 is a partial perspective view showing a variant which does not form part of the present invention,
- figures 4 and 5 are cross-sections respectively taken along the lines IV-IV and V-V of figure 2,
- figure 6 is a partial perspective view of the part indicated by the arrow VI in figure 4, and
- figure 7 is a cross-section taken along the line VII-VII of figure 3.

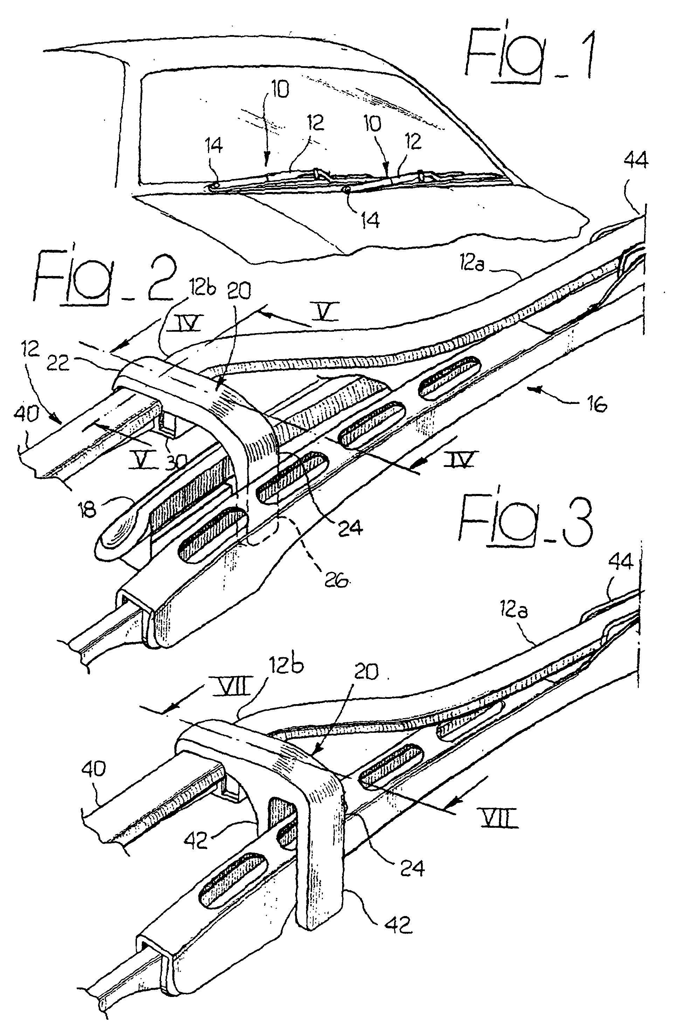

In figure 1 the numeral reference 10 indicates a windscreen wiper device for vehicles comprising an arm 12 fixed to a pivoting pin 14. A windscreen wiper blade 16 is articulated in a known way at an end of the arm 12.

As shown in greater detail in figure 2, the arm 12 is of the type including a first straight section 12a aligned to the blade 16 and carrying the articulation means of the blade and a second straight section 12b spaced apart from the blade 16 along a direction orthogonal to the general plane of the blade. In the embodiment shown in figure 2, the blade 16 is provided, in a known way, with a spoiler 18 permanently fixed to the support structure of the blade 16.

The windscreen wiper device according to the present invention is provided with a retaining element 20 having an attachment portion 22 fixed to the second section 12b of the arm 12 and an engagement portion 24 which projects in a cantilever fashion from the attachment portion 22 along a direction orthogonal to the straight section 12b. In the embodiment shown in figure 2, the engagement portion 24 comprises a finger 26 inserted with small play in the empty space between the spoiler 18 and the support structure of the blade 16. The engagement portion 26 has a thickness which is substantially equal to the distance existing between two mutually facing walls of the spoiler 18 and the support structure of the blade 16.

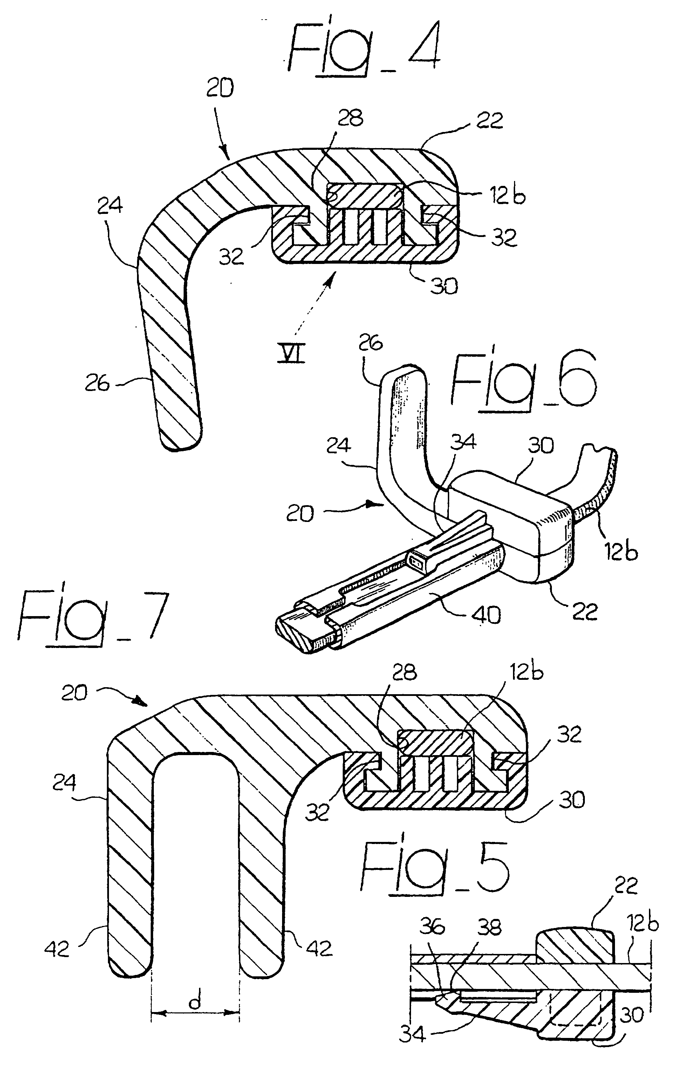

With reference to figures 4, 5 and 6, the retaining element 20 is preferably made of injection moulded plastics material and is advantageously provided with a fixing system which does not require use of tools. In its preferred embodiment, the attachment portion 22 has an open cavity 28 having substantially the same width of the section 12b of the arm. The retaining element 20 is fixed on the arm by means of a locking body 30 which is slidable on a pair of guides 32 which extend parallel to the section 12b. The slidable body 30 is provided with an integral appendix 34 (figures 5 and 6) having at its end a tooth which snap-engages a small step 38 formed in a shaped sheet-metal element 40 forming an extension of the section 12b.

A second embodiment which does not form part of the present invention is shown in figures 3 and 7, in which the elements corresponding to the ones previously disclosed are indicated by the same numeral references. In this case, the blade 16 does not have the spoiler. Therefore, the retaining element 20 has an engagement portion 24 having substantially the shape of an overturned U, including two parallel fingers 42 arranged so that they can receive between them with small play the support structure of the blade 16.

In both previously disclosed embodiments the retaining element forms a second connection point between the blade and the arm, at a certain distance from the articulation zone of the blade to the arm, generally indicated by 44 in figures 2 and 3. This second connection point stiffens considerably the arm-blade assembly and effectively prevents annoying transversal vibrations of the wiping element.

## Claims

1. A windscreen wiper device for vehicles, comprising a windscreen wiper blade (16) articulated at one end of an arm (12), wherein the arm (12) has two straight sections (12a, 12b) a first of which is aligned to the blade (16) and a second of which is spaced apart from the blade along a direction orthogonal to the general plane of the blade, comprising a retaining element (20) for reducing the transversal vibrations of the blade (16), said retaining element comprising an attachment portion (22) for the connection to said second section (12b) and an engagement portion (24) which projects in a cantilever fashion in a transversal direction with respect to the arm from said attachment portion (22), said engagement portion (24) forming a transversal retaining point for the blade (16) **characterized in that** said engagement portion (24) comprises a single finger (26) which is inserted in an empty space formed between the blade (16) and a spoiler (18) fixed thereto.

2. A device according to claim 1, **characterized in that** said attachment portion (22) has an open cavity (28) in which there is inserted a portion of said second section (12b) of the arm, a locking element (30) being provided for fixing the attachment portion (22) to the arm (12).

3. A device according to claim 2, **characterized in that** said locking element (30) is slidable with respect to the attachment section (22) along a direction parallel to the arm (12) and is provided with snap-engagement means (36) cooperating with the arm (12).

## Patentansprüche

1. Scheibenwischervorrichtung für Fahrzeuge, die ein Scheibenwischerblatt (16) umfasst, das an einem Ende eines Arms (12) gelenkig angebracht ist, wobei der Arm (12) zwei gerade Abschnitte (12a, 12b) aufweist, von denen ein erster auf das Blatt (16) ausgerichtet ist und ein zweiter von dem Blatt in einer Richtung senkrecht zur allgemeinen Ebene des Blattes beabstandet ist, die ein Halteelement (20) umfasst, das die Schwingungen des Blattes (16) in Querrichtung verringert, wobei das Halteelement einen Anbringungsteil (22) zur Verbindung mit dem zweiten Abschnitt (12b) und einen Eingriffsteil (24), der auslegerartig in einer Querrichtung in Bezug auf den Arm von dem Anbringungsteil (22) vorsteht, umfasst, und wobei der Eingriffsteil (24) einen Haltepunkt für das Blatt (16) in Querrichtung bildet, **dadurch gekennzeichnet, dass** der Eingriffsteil (24) einen einzelnen Finger (26) umfasst, der in einen Leerraum eingeführt ist, der zwischen dem Blatt (16) und einem daran befestigten Spoiler (18) ausgebildet ist.

2. Vorrichtung nach Anspruch 1, **dadurch gekennzeichnet, dass** der Anbringungsteil (22) einen offenen Hohlraum (28) aufweist, in den ein Teil des zweiten Abschnitts (12b) des Arms eingeführt ist, wobei ein Arretierelement (30) vorhanden ist, das den Anbringungsteil (22) an dem Arm (12) fixiert.

3. Vorrichtung nach Anspruch 2, **dadurch gekennzeichnet, dass** das Arretierelement (30) in Bezug auf den Anbringungsabschnitt (22) in einer Richtung parallel zu dem Arm (12) verschoben werden kann und mit einer Einschnappeinrichtung (36) versehen ist, die mit dem Arm (12) zusammenwirkt.

## Revendications

1. Dispositif d'essuie-glace pour automobile, comprenant un balai d'essuie-glace (16) articulé au niveau d'une extrémité d'un bras (12), dans lequel le bras (12) possède deux sections droites (12a, 12b), dont une première est alignée par rapport au balai (16) et une seconde est espacée du balai le long d'une direction orthogonale au plan général du balai, comprenant un élément de retenue (20) destiné à réduire les vibrations transversales du balai (16), ledit élément de retenue comprenant une partie de fixation (22) pour la connexion à ladite seconde section (12b) et une partie de mise en prise (24) qui fait saillie en porte-à-faux dans une direction transversale par rapport au bras, à partir de ladite partie de fixation (22), ladite partie de mise en prise (24) formant un point transversal de retenue pour le balai (16) **caractérisé en ce que** ladite partie de mise en prise (24) comprend un doigt unique (26) qui est introduit dans un espace vide formé entre le balai (16) et un spoiler (18) fixé à celle-ci.

2. Dispositif selon la revendication 1, **caractérisé en ce que** ladite partie de fixation (22) est pourvue d'une cavité ouverte (28) dans laquelle est introduite une partie de ladite seconde section (12b) du bras, un élément de verrouillage (30) étant prévu pour fixer la partie de fixation (22) au bras (12).

3. Dispositif selon la revendication 2, **caractérisé en ce que** ledit élément de verrouillage (30) peut coulisser par rapport à la section de fixation (22) le long d'une direction parallèle au bras (12) et est muni de moyens de mise en prise par encliquetage (36) qui coopèrent avec le bras (12).
